# EUROPÄISCHE PATENTSCHRIFT

(11) **EP 3 481 705 B1**
(45) Veröffentlichungstag und Bekanntmachung des Hinweises auf die Patenterteilung: **20.01.2021**
(21) Anmeldenummer: 17732307.8
(22) Anmeldetag: 23.06.2017
(51) Int. Cl.: B62D 35/00

(54) **HECKSPOILER-EINRICHTUNG FÜR EIN FAHRZEUG, INSBESONDERE LKW**
REAR SPOILER DEVICE FOR A VEHICLE, IN PARTICULAR LORRY
ENSEMBLE BECQUET ARRIÈRE CONÇU POUR UN VÉHICULE, EN PARTICULIER UN POIDS LOURD

(30) Priorität: 06.07.2016 DE 102016008213
(43) Veröffentlichungstag der Anmeldung: 15.05.2019
(73) Patentinhaber: WABCO Europe BVBA, 1170 Brussels (BE)
(72) Erfinder: DIECKMANN, Thomas, 30982 Pattensen (DE); KROST, Jakob Tobias, 38118 Braunschweig (DE); OLEKSIK, Josef, 38102 Braunschweig (DE); RICHTER, Timo, 38106 Braunschweig (DE); VAN RAEMDONCK, Gandert Marcel Rita, 2611 PW Delft (NL)
(74) Vertreter: Koschnitzki, Thomas
(86) Internationale Anmeldenummer: PCT/EP2017/000732
(87) Internationale Veröffentlichungsnummer: WO 2018/006992

(56) Entgegenhaltungen:
- DE-A1-102011 107 366
- DE-A1-102013 006 376
- DE-A1-102013 008 910
- US-A- 4 214 787
- US-A1- 2012 223 544

## Beschreibung

Die Erfindung betrifft eine Heckspoiler-Einrichtung für ein Fahrzeug, insbesondere einen LKW.

Heckspoiler dienen der Verbesserung der Aerodynamik eines Fahrzeugs, insbesondere eines Fahrzeugs mit einem kastenförmigen Aufbau und einem stumpfen Ende wie z. B. einem LKW, und können den Kraftstoffverbrauch entsprechend senken. Sie werden im Heckbereich des Fahrzeugs angebracht und weisen im Allgemeinen Luftleitelemente auf, die die Konturen des Fahrzeugs nach hinten verlängern, z. B. mit gekrümmten oder geraden bzw. planen, nach hinten und zur Mitte hin verlaufenden Flächen. Derartige Heckspoiler können z. B. am Dach oder an den Seitenwänden des LKW befestigt werden.

Die DE 20 2009 014 476 U1 und DE 20 2009 015 009 U1 zeigen Heckspoilerausbildungen, bei denen die Luftleitelemente bzw. Spoilerelemente verschiebbar oder verschwenkbar angeordnet sind, um ein ungestörtes Öffnen der Tür zu ermöglichen.

Schwenk- oder klappbare Heckspoiler werden im Allgemeinen an dem Scharnier der Hecktür angebunden. Die DE 102 28 658 A1 zeigt verschiedene Klapplösungen, bei denen über ein Scharnier schwenkbare Flächen im Fahrtbereich eine aerodynamische Optimierung ermöglichen sollen.

Hierbei sind Anbindungen der Luftleitelemente im Scharnierbereich der Hecktüre grundsätzlich problematisch, da im Scharnierbereich lediglich ein geringer Stauraum verbleibt, um nicht ein vollständiges Öffnen der Tür und ein Schwenken der Hecktüre um etwa 270 Grad nach vorne zur Anlage an der Seitenfläche des Fahrzeugs zu behindern. Um Luftleitelemente im Scharnierbereich der Tür anzubinden, sind daher komplexere Systeme bekannt. Die DE 10 2008 036 888 A1 zeigt Ausbildungen von Heckspoilern und Anbringungen am Fahrzeug, bei denen unter anderem vorgesehen ist, zwischen der Hecktür und dem Luftleitelement einen Mitnehmer anzubringen, der für eine weitgehend ausgeschwenkte Stellung der Tür ausgehängt werden kann. Beim Ausschwenken der Heckklappe nach außen um ihre vertikale Schwenkachse wird das Luftleitelement somit zunächst mitgeschwenkt, bis es an die Außenflächen und Seitenwand gelangt. Beim nachfolgenden Ausschwenken der Heckklappe wird das flexible Mitnehmerelement entsprechend gestaucht

Die Dokumente DE 10 2013 006 376 a1, DE 10 2013 008 910 a1 und DE 10 2011 107 366 A1 zeigen verstellbare Heckspoilereinrichtungen für Fahrzeuge.

Derartige Systeme sind jedoch im Allgemeinen recht aufwendig, mit z. B. komplexen Gelenk- oder Scharnierausbildungen. Hierbei sind oftmals Verformungen der Luftleitelemente oder weiterer Teile erforderlich, die somit entsprechende elastische, dehnbare, zum Teil jedoch nicht witterungsbeständige Materialien erfordern. Auch ist oftmals lediglich der Einsatz relativ kurzer Luftleitelemente möglich, wodurch die Verbesserung der Aerodynamik begrenzt ist.

Der Erfindung liegt die Aufgabe zugrunde, eine Heckspoiler-Einrichtung zu schaffen, die mit relativ geringem Aufwand ausbildbar ist und eine sichere, einfache Verstellung zwischen der Fahrstellung und Grundstellung ermöglicht.

Diese Aufgabe wird durch einen Heckspoiler-Einrichtung nach Anspruch 1 gelöst. Die Unteransprüche beschreiben bevorzugte Weiterbildungen.

Weiterhin ist ein Fahrzeug, insbesondere LKW, mit einer derartigen, an seinem Heck-Bereich angebrachten Heckspoiler-Einrichtung vorgesehen.

Die Heckspoiler-Einrichtung weist somit ein Luftleitelement, d. h. ein Seiten-Luftleitelement und/oder Dachluftleitelement auf, das gelenkig an der Hecktüre angebracht und von einer eingeklappten Grundstellung in die ausgeklappte Fahrstellung verstellbar ist. Hierzu ist eine Verstelleinrichtung vorgesehen, die zwischen einem türseitigen Gelenk, das insbesondere an der Außenseite der Hecktüre vorgesehen ist, und einem spoilerseitigen Gelenk, das insbesondere an der Innenfläche des Luftleitelements vorgesehen ist, gelenkig angebracht ist und eine Längenverstellbarkeit ermöglicht.

Zwischen dem türseitigem Gelenk und dem spoilerseitigen Gelenk ist mindestens ein, vorzugsweise genau ein Zwischengelenk vorgesehen, das zum Einknicken dient. Unter einem Einknicken in dem Zwischengelenk ist insbesondere eine Stauchung oder Verkleinerung des am Zwischengelenk ausgebildeten Zwischengelenk-Winkels, d.h. von einer langgestreckten Ausbildung zu einer eingewinkelten Ausbildung, zu verstehen.

In der eingefahrenen Grundstellung ist die Verstelleinrichtung vorzugsweise langgestreckt, mit einem großen Zwischengelenk-Winkel, der jedoch (etwas) geringer als 180 Grad ist, so dass das Zwischengelenk vorzugsweise außerhalb der Verbindungslinie zwischen dem türseitigem Gelenk und dem vorderseitigen Gelenk liegt. Das Zwischengelenk liegt insbesondere etwas hinter dieser Verbindungslinie, so dass beim nachfolgenden Ausfahren der Verstelleinrichtung das Zwischengelenk weiter nach hinten gedrückt wird und hierdurch einknickt.

Hierdurch wird bereits ein effektiver Hebelarm der Verstelleinrichtung, mit dem die Verstelleinrichtung an dem Luftleitelement angreift und dieses gegenüber seiner türseitigen Anbindung bzw. türseitigen Spoilergelenk verstellt, vergrößert.

Vorteilhafterweise gelangt die abknickende Gelenkverstelleinrichtung beim Ausfahren gegen das Luftleitelement, z. B. mit dem Zwischengelenk oder einem zwischen dem Zwischengelenk und dem türseitigen Gelenk ausgebildeten Zwischenglied. Somit wird ein verstellbares Dreieck aus dem türseitigen Gelenk, dem spoilerseitigen Gelenk und dem Zwischengelenk gebildet. Die Längeneinstelleinrichtung wirkt insbesondere zwischen dem türseitigen Gelenk und dem Zwischenglied, so dass von der Hecktüre bzw. Fahrzeugstruktur aus eine Ansteuerung und Zuführung einer Hilfskraft erfolgen kann.

Eine effektive und sichere Anlage wird insbesondere in einer Aussparung des Luftleitelementes erreicht, so dass das Zwischenglied etwas durch die Aussparung nach hinten gelangt. Hierzu kann eine Abdeckung, z. B. eine flexible Abdeckung, vorgesehen sein, die die Aussparung mit dem nach außen frei liegen Zwischengelenk abdeckt.

Erfindungsgemäß werden somit einige Vorteile erreicht:
Die erfindungsgemäße Heckspoiler-Einrichtung mit der Verstelleinrichtung ermöglicht eine durchgehende Verstellbewegung, bei der zunächst beim Ausfahren in einem ersten Verstellweg der effektive Hebelarm eingestellt wird, insbesondere durch Einknicken im Zwischenglied bis zur zusätzlichen Anlage an dem Spoiler, woraufhin dann in einem zweiten Verstellweg die eigentliche Verstellung des Spoilers mit dem großen Hebelarm erfolgt; diese Verstellbereiche gehen vorzugsweise ohne Zwischenstopp ineinander über und können grundsätzlich auch miteinander überlappen.

Die Verstelleinrichtung ermöglicht ein festes Halten bzw. Arretieren in beiden Stellungen, ohne zusätzliche Sicherungen oder Arretiermittel.

Es wird eine Verstellung mittels einer Hilfskraft, z. B. ein fluidbetätigter Zylinder oder elektrischer Antrieb ermöglicht, die die Längeneinstelleinrichtung antreibt. Die hilfskraftbetätigte Längeneinstelleinrichtung kann relativ klein dimensioniert werden, da sie durch die Vergrößerung des Hebelarms mit hoher Untersetzung bzw. großem effektiven Hebelarm angreifen kann. Somit sind sichere Verstellungen mit geringer Kraft und geringer apparativer Ausbildung, z. B. einem kleinbauenden Zylinder möglich.

Hierdurch ist auch die Verstellung ohne händisches Eingreifen des Nutzers, z. B. während der Fahrt möglich, z. B. durch eine Aktivierung von der Fahrerkabine oder auch automatisiert in Abhängigkeit der Geschwindigkeit.

Da die Verstelleinrichtung kleinbauend ist, kann sie flach zwischen dem Luftleitelement und der Hecktüre aufgenommen werden, und somit in dieser Grundstellung ein Aufklappen und Umlegung der Hecktüre um 270 Grad nach vorne, zur Anlage an der Seitenfläche, unter Aufnahme der Heckspoiler-Einrichtung zwischen Seitentüre und Hecktüre ermöglichen.

Hierbei ist die Heckspoiler-Einrichtung vorzugsweise vollständig an der Hecktüre aufnehmbar, d.h. ohne Befestigung an der Fahrzeugstruktur.

Zusätzlich oder alternativ zu einem Seiten-Luftleitelement kann auch ein entsprechendes Dach- Luftleitelement vorgesehen sein.

Ein weiterer Vorteil ist, dass grundsätzlich keine Längenbeschränkung des Elementes erforderlich ist; somit können mit hinreichend langen Luftleitelementen gute aerodynamische Eigenschaften erreicht werden.

Ein besonderer Vorteil liegt darin, dass der bei derartigen Verstellungen und Luftleitelementen problematische Stauraum im Bereich des Türscharniers nicht beeinträchtigt wird. Das Türscharnier kann frei wirken und die Verstellung der Hecktüre ermöglichen. Die Heckspoiler-Einrichtung kann außen an der Hecktüre angebracht sein, und ist im Scharnierbereich der Hecktüre auch kleinbauend, z. B. nur mit einem Spoilergelenk, mit dem das Luftleitelement an der Hecktüre angebracht ist. Die zusätzliche Verstelleinrichtung und weitere Elemente sind dann von dem Scharnierbereich beabstandet weiter zur Fahrzeugmitte vorgesehen.

Die Erfindung wird im Folgenden anhand der beiliegenden Zeichnungen an einigen Ausführungsformen näher erläutert. Es zeigen:
- Fig. 1: eine perspektivische Ansicht eines Heck-Bereichs eines LKW mit einer Heckspoiler-Einrichtung gemäß einer Ausführungsform der Erfindung;
- Fig. 2: eine Aufsicht auf den linken Heck-Bereich des LKW bei einer eingeklappten Stellung des Seitenspoilers;
- Fig. 3: eine der Figur 2 entsprechende Darstellung bei teilweise ausgefahrener Stellung des Seitenspoilers;
- Fig. 4: eine der Figur 2 und 3 entsprechende Darstellung bei ausgefahrener Stellung des Seitenspoilers;
- Fig. 5: eine der Figur 2 entsprechende, schematisierte Darstellung der eingeklappten Grundstellung des Seitenspoilers;
- Fig. 6: die der Figur 3 entsprechende, teilweise ausgefahrene Position in schematisierter Darstellung.

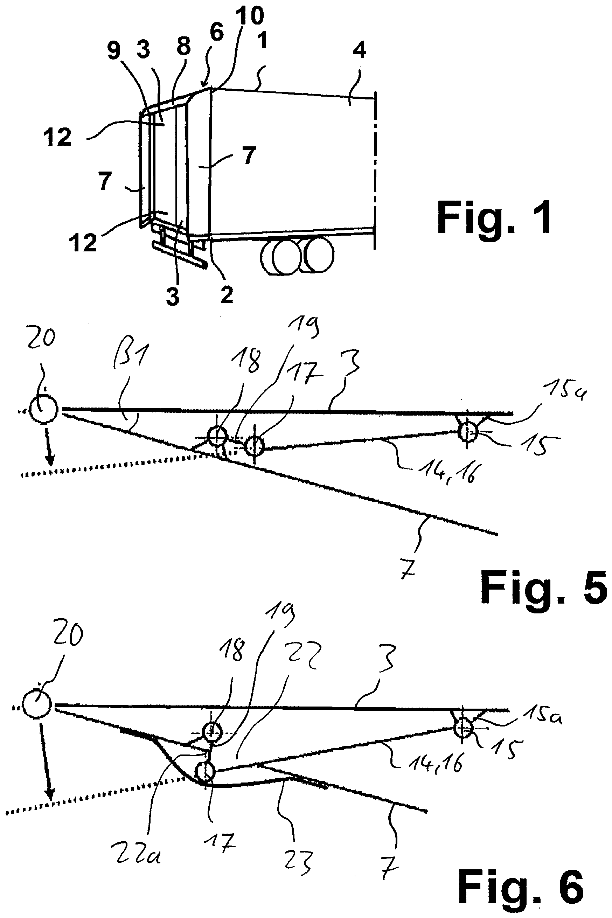

Ein in Figur 1 gezeigter LKW 1 weist in üblicher Weise einen Heck-Bereich 2 mit zwei nach außen aufschwingbaren Hecktüren 3, Seitenflächen 4 und einer Dachfläche 5 auf, so dass der LKW 1 zumindest in seinem Heck- Bereich 2 im Wesentlichen kastenförmig mit stumpfem Ende ausgebildet ist, was zunächst zu ungünstigen aerodynamischen Eigenschaften führt. Daher ist eine Heckspoiler-Einrichtung 6 mit zwei Seitenspoilern 7 und zwei Dach-Luftleitelementen 8 vorgesehen, wobei an jeder Hecktüre 3 jeweils ein Seiten- Luftleitelement 7 und ein Dach-Luftleitelement 8 vorgesehen ist. Die Hecktüren 3 sind jeweils in Hecktüren-Scharnieren 9 an einer Fahrzeugstruktur 10 bzw. den Seitenflächen 4 angelenkt. Die Seiten- Luftleitelemente 7 und Dach-Luftleitelemente 8 sind vorteilhafterweise aus Kunststoff-Panels bzw. steife Kunststoff-Flächen ausgebildet und können plan und eben bzw. gradlinig, oder aber z. B. nach hinten hin leicht gekrümmt ausgebildet sein.

Die Heckspoiler-Einrichtung 6 kann vorteilhafterweise ausschließlich an den Hecktüren 3 angebracht werden, so dass an jeder Hecktüre 3 jeweils ein Seitenspoiler 7 und ein Dachspoiler 8 angebracht ist.

Die Heckspoiler-Einrichtung 6 kann zwischen der in Figur 1 gezeigten, ausgefahrenen Fahrstellung, bei der die Seiten-Luftleitelemente 7 schräg nach hinten und innen verlaufen (Fahrstellung), eingeklappt werden, um eine Grundstellung auszubilden, in der sie nahe an den Hecktüren 3 anliegen, so dass die Hecktüren 3 in der Grundstellung mit den aufgelegten Seiten- Luftleitelementen 7, vorzugsweise auch aufgelegten Dach-Luftleitelementen 8, nachfolgend zunächst nach hinten aufgeklappt und um 270 Grad nach vorne geschwenkt werden kann, so dass die Hecktüren 3 z. B. an den Seitenflächen 4 angelegt und befestigt werden können und hierbei jeweils ein Seiten- Luftleitelement 7 und ein Dach-Luftleitelement 8 zwischen Hecktüre 3 und Seitenfläche 4 aufnehmen.

Die Verstellung zwischen der Fahrstellung und der Grundstellung erfolgt automatisiert durch eine Verstelleinrichtung 12, die die Seiten- Luftleitelemente 7 und die Dach-Luftleitelemente 8 kombiniert oder auch getrennt ansteuern kann. Nachfolgend wird die Verstellung der Seiten- Luftleitelemente 7 beschrieben, wobei die Verstellung der Dach-Luftleitelemente 8 entsprechend erfolgen kann.

Die Verstelleinrichtung 12 weist einen Zylinder, z. B. pneumatischen Zylinder 14 auf, der in einem Zylindergelenk 15 an der Außenseite der Hecktüre 3 befestigt ist, wobei das Zylindergelenk 15 vorteilhafterweise durch z. B. einen Lagerbock 15a oder ähnlichen Abstandshalter etwas von der Türfläche nach hinten beabstandet ist. Der pneumatische Zylinder 14 fährt eine Kolbenstange 16 aus, an deren Ende ein Zwischengelenk 17 angeordnet ist, das mit einem spoilerseitigen Gelenk 18 über ein Zwischenglied 19 verbunden ist. Somit bilden der pneumatische Zylinder 14 und die Kolbenstange 16 eine Längeneinstelleinrichtung 14, 16 zur Verstellung des Abstandes zwischen den Gelenken 15 und 17. Das Zwischenglied 19 ist somit an seinen beiden Enden jeweils in den Gelenken 17 und 18 angelenkt, wobei das spoilerseitige Gelenk 18 an der Innenseite 7a des Seiten-Luftleitelementes 7 angebracht ist und entsprechend etwas von der Innenseite entfernt vorgesehen ist. Die Längeneinstelleinrichtung 14, 16 bildet mit den Gelenken 15, 17, dem Zwischenglied 19 und dem spoilerseitigen Gelenk 18 somit die Verstelleinrichtung 12.

Das Seiten-Luftleitelement 7 ist an seinem in Fahrtrichtung vorderen Ende 7c in einem Verstell-Gelenk 20 an der Hecktüre 3 befestigt, z. B. etwa in der Achse des Hecktür-Scharniers 9, vorzugsweise zu dem Hecktür-Scharnier 9 etwas nach innen versetzt, so dass das Verstell-Gelenk 20 an der Hecktüre 3 angebracht ist.

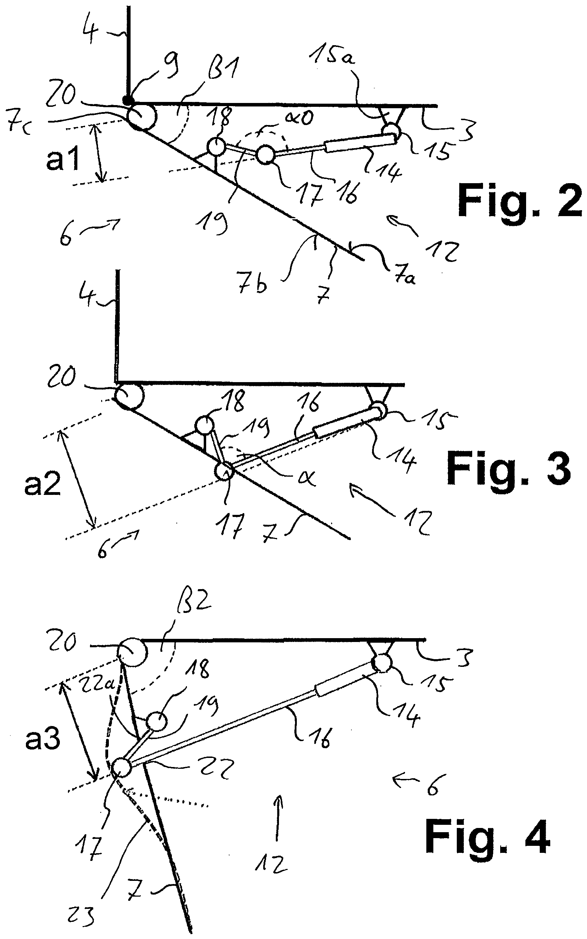

Somit kann durch eine Betätigung der Verstelleinrichtung, d.h. Druckluftbeaufschlagung des pneumatischen Zylinders 14, das Seiten-Luftleitelement 7 geschwenkt werden; in der eingefahrenen Stellung der Kolbenstange 16 liegt das Seiten-Luftleitelement 7 nahe an der Hecktüre 3, wobei die Darstellung der Figuren 2 bis 4 zur Veranschaulichung die Quer-Erstreckung der Hecktüre 3 nicht vollständig wiedergeben und somit in der Grundstellung der Fig. 2 das Seiten-Luftleitelement 7 flacher, d.h. mit kleinerem Anlagewinkel β1 an der Hecktüre 3 anliegt. Die schematisierten Darstellungen der Figuren 4 und 5 zeigen, dass das Seiten-Luftelement 7 relativ dicht, d.h. mit kleinem Anlagewinkel β1, an der Hecktüre 3 angelegt werden kann. Beim Ausfahren der Kolbenstange 16 wird somit das Seiten-Luftleitelement von der Hecktüre 3 weggeschwenkt und schräg gestellt, so dass es von seinem vorderen Ende 7c zu seinem hinteren Ende 7d nach hinten und innen verläuft und gegenüber der Hecktüre 3 einen Fahrstellungs-Winkel β2 z. B. zwischen 70 und weniger als 90° einnimmt.

Die Verstelleinrichtung 12 bildet in dem Zylindergelenk 15, der Längeneinstelleinrichtung 14, 16, das Zwischengelenk 17, dem Zwischenglied 19 und dem inneren Lagerglied 18 eine Dreigelenks- Konstruktion bzw. ein verstellbares Dreieck, das in dem Zwischengelenk 17 einen Zwischengelenk-Winkel α ausbildet, der in der eingefahrenen Grundstellung der Fig. 2 einen stumpfen Winkel zur Hecktüre 3 bzw. nach vorne hin ausbildet, d.h. mit Anfangswert α0, der etwas kleiner als 180 Grad ist (90° < α0 < 180°), und nachfolgend verringert wird, indem das Zwischengelenk 17 weiter einknickt.

Wie aus Figur 3 ersichtlich ist, ist in dem Seiten-Luftleitelement 7 eine Aussparung 22 ausgebildet, in die das Zwischengelenk 17 beim Ausfahren der Kolbenstange 16 gelangt, wobei vorteilhafter Weise nachfolgend das Zwischenglied 19 oder auch das Zwischengelenk 17 selbst zur Anlage in der Aussparung 22 gelangt, insbesondere an einem vorderen Anschlag 22a der Aussparung 22. Hierdurch ist der erste Verstellweg beendet; bei der nachfolgenden Ausfahrbewegung der Kolbenstange 16 schließt sich ohne Stopp der zweite Verstellweg an, in dem dann das Seiten- Luftleitelement 7 nach außen schwenkt.

In dem ersten Verstellweg des Ausfahrens der Kolbenstange 16 wird im Allgemeinen das Seiten-Luftleitelement 7 noch nicht verstellt, solange das Zwischenglied 19 oder Zwischengelenk 17 noch nicht an den Anschlag 22a gelangen; grundsätzlich kann aber bei einem höherem Widerstand in den Gelenken 17, 18 als dem Verstell-Gelenk 20 auch schon eine Ausschwenkbewegung des Seiten-Luftleitelementes 7 nach außen erfolgen; dies ist nicht relevant, da eine durchgängige Verstellbewegung vorliegt.

Die Aussparung 22 kann relativ klein gehalten und gemäß der schematisierten Darstellung der Figur 5 durch eine flexible Abdeckung 23, z. B. eine flexible Hutze oder flexible elastische Plane abgedeckt werden, die vorzugsweise an der Außenseite des Seiten-Luftleitelementes 7 angebracht ist und z. B. aus einem flexiblen Kunststoffmaterial oder auch Gummi-Material ausgebildet ist. Hierdurch wird eine Wirbelbildung an dem Zwischengelenk 17 und eine mögliche Beschädigung des Zwischengelenks 17 vermieden.

Durch das Einknicken in dem Zwischengelenk 17 vergrößert sich der effektive Hebelarm a, mit dem die Kolbenstange 16 gegenüber dem Verstell-Gelenk 20 angreift, von dem Wert a1 der Fig. 2 auf den Wert a2 der Fig. 3, wobei er insbesondere auch um das ausgeklappte Zwischenglied 19 vergrößert ist, so dass das auf das Seiten-Luftleitelement 7 ausgeübte Drehmoment vergrößert wird. Somit wird das Seiten-Luftleitelement 7 weiter ausgefahren, wobei bereits in der Zwischenstellung der Figur 3 ein relativ größer Hebelarm a2 vorliegt, der nachfolgend beim Ausschwenken des Seiten- Luftleitelement 7 nach hinten und seitlich nach außen noch vergrößert wird auf den Wert a3.

Es wird somit die Fahrstellung der Fig. 4 erreicht, die durch den Pneumatik-Zylinder 14 sicher gehalten und arretiert wird, wozu z. B. eine pneumatische Ventilansteuerung vorgesehen sein kann, die das im Pneumatik-Zylinder 14 gespeicherte Luftvolumen abschließt. Somit ist keine zusätzliche Arretierung erforderlich.

Bei der nachfolgenden Rückverstellung von der Fahrstellung aus erfolgt eine durchgängige Zug-Belastung, so dass keine kritischen Zwischensituationen auftreten können. Im allgemeinen wird zunächst der Zwischengelenk-Winkel α am Zwischengelenk 17 verringert, d.h. das Zwischengelenk 17 wird mit der Kolbenstange 16 zum Zylinder 14 hin verstellt, bis der Wert α0 der Grundstellung erreicht wird, woraufhin sich dann eine Zugwirkung auf das spoilerseitige Gelenk 18 anschließt und somit das Seiten-Luftleitelement 7 in die eingefahrene Grundstellung verstellt wird. Somit werden beim Einfahrvorgang im Allgemeinen nicht der zweite und erste Verstellweg der Ausfahrbewegung in umgekehrter Reihenfolge durchfahren, sondern es erfolgt zunächst ein belastungsarmer dritter Verstellweg, bis das Zwischengelenk 17 an den Anschlag des Zwischengelenk-Winkels α0 der Grundstellung gelangt und sich dann ein vierter Verstellweg anschließt, bei dem das Seiten-Luftleitelement 7 geschwenkt wird, bis die Grundstellung der Fig. 2 erreicht ist.

Sowohl bei dem Ausfahrvorgang als auch dem Einfahrvorgang sind hierbei die Zwischensituationen unproblematisch.

In entsprechender Weise kann das Dach-Luftleitelement 8 verstellt werden.

Somit sind die Einfahrbewegungen und die Ausfahrbewegungen selbsttätig und automatisiert, ohne weiteren Eingriff des Benutzers z. B. durch Aktivierung von der Fahrerkabine aus oder selbsttätig in Abhängigkeit der Fahrgeschwindigkeit möglich.

In der eingefahrenen Grundstellung kann die Hecktüre 3 vollständig zunächst nach hinten und dann um fast 270 Grad nach vorne verstellt werden, da die gezeigte Ausbildung der Fig. 2 flach an der Hecktüre 3 anliegt, und sicher zwischen Hecktüre 3 und Seitenelement 7 aufgenommen ist.

### Bezugszeichenliste (Teil der Beschreibung)

- 1: LKW
- 2: Heck-Bereich
- 3: Hecktüre
- 4: Seitenfläche
- 5: Dachfläche
- 6: Heckspoilereinrichtung
- 7: Seiten-Luftleitelement
- 7a: Innenseite des Seiten-Luftleitelementes
- 7b: Außenseite des Dach-Luftleitelementes
- 7c: vorderes Ende des Dach-Luftleitelementes
- 8: Dach-Luftleitelement
- 9: Hecktür-Scharnier
- 10: Fahrzeug-Struktur
- 12: Verstelleinrichtung
- 14: pneumatischer Zylinder
- 15: Zylindergelenk
- 15a: Abstandshalter, z. B. Lagerbock
- 16: Kolbenstange
- 17: Zwischengelenk
- 18: spoilerseitigen Gelenk
- 19: Zwischenglied
- 20: Verstell-Gelenk
- 22: Aussparung
- 22a: vorderer Anschlag der Aussparung 22
- 23: flexible Abdeckung
- α: Zwischengelenk-Winkel am Zwischengelenk 17
- α0: Zwischengelenk-Winkel in der Grundstellung, α0 < 180°
- a: effektive Hebellänge der Verstelleinrichtung 12 am Luftleitelement
- β: Winkel zwischen Hecktüre 3 und Seiten-Luftleitelement 7, dabei
- β1: Anlagewinkel,
- β2: Fahrstellungs-Winkel

## Patentansprüche

1. Heckspoiler-Einrichtung (6) für ein mindestens eine Hecktüre (3) aufweisendes Fahrzeug (1), wobei die Heckspoiler-Einrichtung (6) aufweist:
ein Luftleitelement (7, 8),
eine Verstelleinrichtung (12) zur Verstellung des Luftleitelementes (7, 8) zwischen einer eingefalteten Grundstellung, die ein Öffnen der Hecktüre ermöglicht, und einer ausgefahrenen Fahrstellung zur Konturverlängerung und aerodynamischen Luftleitung, wobei
die Verstelleinrichtung (12) jeweils an einem türseitigen Gelenk (15) und einem spoilerseitigen Gelenk (18) gelenkig angebracht ist und ein zwischen dem türseitigen Gelenk (15) und spoilerseitigen Gelenk (18) vorgesehenes Zwischengelenk (17) aufweist,
wobei eine Verstellung der Verstelleinrichung (12) von der Grundstellung zu der Fahrtstellung zu einer Veränderung eines am Zwischengelenk (17) ausgebildeten Zwischengelenk-Winkels (α) führt, **dadurch gekennzeichnet, dass** die Verstelleinrichtung (12) bei der Verstellung von der Grundstellung in die Fahrstellung ausgebildet ist für
- einen ersten Verstellweg unter Einknickung in dem Zwischengelenk (17) und Vergrößerung eines effektiven Hebelarms (a) gegenüber einem Verstell-Gelenk (20) des Luftleitelementes (7) bis zu einer Anlage an dem Luftleitelement (7), und einen zweiten Verstellweg mit Anlage an dem Luftleitelement (7) unter Verstellung des Luftleitelementes (7)..

2. Heckspoiler-Einrichtung (6) nach Anspruch 1, **dadurch gekennzeichnet, dass** der Zwischengelenk-Winkel (α) gebildet ist als Winkel zwischen einer Verbindungslinie von dem Zwischengelenk (17) zu dem türseitigen Gelenk (15) und einer Verbindungslinie von dem Zwischengelenk (17) zu dem spoilerseitigen Gelenk (18).

3. Heckspoiler-Einrichtung (6) nach Anspruch 1 oder 2, **dadurch gekennzeichnet, dass** in der Grundstellung das Zwischengelenk (17) außerhalb einer Verbindungslinie zwischen dem türseitigen Gelenk (15) und dem spoilerseitigen Gelenk (18) liegt und/oder der am Zwischengelenk (17) ausgebildete Zwischengelenk-Winkel (α0) ungleich 180° ist.

4. Heckspoiler-Einrichtung (6) nach einem der Ansprüche 1 bis 3, **dadurch gekennzeichnet**, dassdie Verstelleinrichtung (12) eine Längeneinstelleinrichtung (14, 16) zur Einstellung eines Abstandes zwischen einerseits dem Zwischengelenk (17) und andererseits entweder dem türseitigen Gelenk (15) oder dem spoilerseitigen Gelenk (18) aufweist.

5. Heckspoiler-Einrichtung (6) nach Anspruch 4, **dadurch gekennzeichnet, dass** die Längeneinstelleinrichtung (14, 16) hilfskraftbetätigt ist, vorzugsweise als pneumatische Verstellung mit pneumatischem Zylinder (14) und ausfahrbarer Kolbenstange (16) oder als elektrische Längenverstellung.

6. Heckspoiler-Einrichtung (6) nach Anspruch 4 oder 5, **dadurch gekennzeichnet, dass** die Längeneinstelleinrichtung (14, 16) zwischen dem Zwischengelenk (17) und dem türseitigen Gelenk (15) vorgesehen ist zur Einstellung eines Abstandes zwischen dem türseitigen Türgelenk (15) und dem Zwischengelenk (17), und zwischen dem Zwischengelenk (17) und dem spoilerseitigen Gelenk (18) ein starres Zwischenglied (19) vorgesehen ist.

7. Heckspoiler-Einrichtung (6) nach einem der Ansprüche 4 bis 6, **dadurch gekennzeichnet, dass** die Verstellung zwischen der Grundstellung und der Fahrstellung jeweils in einer durchgängigen Stellbewegung durch Ausfahren und Einfahren der Längeneinstelleinrichtung (14, 16) durchführbar ist.

8. Heckspoiler-Einrichtung (6) nach einem der vorherigen Anspruche, **dadurch gekennzeichnet, dass**
in der Grundstellung ein Abstand zwischen dem türseitigen Gelenk (15) und dem spoilerseitigen Gelenk (18) minimal ist und der Zwischengelenk-Winkel (α) einen maximalen Wert (α0) aufweist, und
in der Fahrstellung der Abstand zwischen dem türseitigen Gelenk (15) und dem spoilerseitigen Gelenk (18) maximal ist und der Zwischengelenk-Winkel (α) einen minimalen Wert aufweist.

9. Heckspoiler-Einrichtung (6) nach einem der vorherigen Ansprüche, **dadurch gekennzeichnet, dass** das türseitige Gelenk (15) von der Hecktüre (3) über einen Abstandshalter, z. B. Lagerbock (15a), beabstandet anbringbar ist.

10. Heckspoiler-Einrichtung (6) nach einem der vorherigen Ansprüche, **dadurch gekennzeichnet, dass** das spoilerseitige Gelenk (18) an der Innenseite (7a) des Luftleitelementes (7) vorgesehen ist, vorzugsweise mit Beabstandung gegenüber der Innenseite.

11. Heckspoiler-Einrichtung (6) nach einem der vorherigen Ansprüche, **dadurch gekennzeichnet, dass** das Luftleitelement ein Seiten-Luftleitelement (7) ist, das mit einem Verstell-Gelenk (20) an einem seitlichen äußeren Bereich der Hecktüre oder hinter der Hecktüre (3) anbringbar ist, z. B. im Bereich eines Türscharniers in der Hecktüre (3).

12. Heckspoiler-Einrichtung (6) nach einem der Ansprüche 1 bis 10, **dadurch gekennzeichnet, dass** das Luftleitelement ein Dach-Luftleitelement (8) ist.

13. Fahrzeug (1), insbesondere LKW, mit einer Heckspoiler-Einrichtung (6) nach einem der vorherigen Ansprüche, wobei
die Heckspoiler-Einrichtung (6) während der Fahrt des Fahrzeugs (1) zwischen der Grundstellung und der Fahrstellung verstellbar ist, durch elektrische und/oder pneumatische Ansteuerung.

14. Fahrzeug (1) nach Anspruch 13, **dadurch gekennzeichnet, dass** in der eingefahrenen Grundstellung der Heckspoiler-Einrichtung (6) die Hecktüre (3) öffenbar und fast 270 Grad umschwenkbar ist, zur Anlage an einer Seitenfläche (3) des Fahrzeugs (1),
wobei die in ihrer Grundstellung eingefahrene Heckspoiler-Einrichtung (6) zwischen der Hecktüre (3) und der Seitenfläche (6) aufnehmbar ist.

## Claims

1. Rear spoiler device (6) for a vehicle (1) having at least one rear door (3), wherein the rear spoiler device (6) has:
an air guide element (7, 8),
an adjustment device (12) for adjusting the air guide element (7, 8) between a retracted base position which allows the rear door to be opened, and an extended travel position for extending the contours and aerodynamically guiding the air, wherein
the adjustment device (12) is mounted in articulated fashion on both a door-side joint (15) and on a spoiler-side joint (18), and has an intermediate joint (17) provided between the door-side joint (15) and the spoiler-side joint (18),
wherein an adjustment of the adjustment device (12) from the base position to the travel position leads to a change of an intermediate joint angle (α) formed at the intermediate joint (17),
**characterized in that**
on adjustment from the base position to the travel position, the adjustment device (12) is configured for
- a first adjustment travel with collapse of the intermediate joint (17) and enlargement of an effective lever arm (a) relative to an adjustment joint (20) of the air guide element (7), up to a contact on the air guide element (7), and
a second adjustment travel with contact on the air guide element (7) and with adjustment of the air guide element (7) .

2. Rear spoiler device (6) according to Claim 1,
**characterized in that** the intermediate joint angle (α) is formed as an angle between a connecting line from the intermediate joint (17) to the door-side joint (15) and a connecting line from the intermediate joint (17) to the spoiler-side joint (18).

3. Rear spoiler device (6) according to Claim 1 or 2,
**characterized in that** in the base position, the intermediate joint (17) lies outside a connecting line between the door-side joint (15) and the spoiler-side joint (18), and/or the intermediate joint angle (α0) formed at the intermediate joint (17) is not equal to 180°.

4. Rear spoiler device (6) according to one of Claims 1 to 3,
**characterized in that** the adjustment device (12) has a length adjustment device (14, 16) for adjusting a distance between the intermediate joint (17) on one side and either the door-side joint (15) or the spoiler-side joint (18) on the other side.

5. Rear spoiler device (6) according to Claim 4,
**characterized in that** the length adjustment device (14, 16) is actuated by auxiliary force, preferably as a pneumatic adjustment with a pneumatic cylinder (14) and an extendable piston rod (16) or as an electric length adjustment.

6. Rear spoiler device (6) according to Claim 4 or 5,
**characterized in that** the length adjustment device (14, 16) is provided between the intermediate joint (17) and the door-side joint (15) for adjusting a distance between the door-side joint (15) and the intermediate joint (17), and a rigid intermediate member (19) is provided between the intermediate joint (17) and the spoiler-side joint (18) .

7. Rear spoiler device (6) according to one of Claims 4 to 6,
**characterized in that** the adjustment between the base position and the travel position can be performed in a continuous adjustment movement by extending and retracting the length adjustment device (14, 16).

8. Rear spoiler device (6) according to one of the preceding claims,
**characterized in that** in the base position, a distance between the door-side joint (15) and the spoiler-side joint (18) is minimal and the intermediate joint angle (α) has a maximal value (α0), and in the travel position, the distance between the door-side joint (15) and the spoiler-side joint (18) is maximal and the intermediate joint angle (α) has a minimal value.

9. Rear spoiler device (6) according to one of the preceding claims,
**characterized in that** the door-side joint (15) can be mounted spaced from the rear doors (3) via a spacer, e.g. a bearing block (15a).

10. Rear spoiler device (6) according to one of the preceding claims,
**characterized in that** the spoiler-side joint (18) is provided on the inside (7a) of the air guide element (7), preferably spaced from the inside.

11. Rear spoiler device (6) according to one of the preceding claims,
**characterized in that** the air guide element is a side air guide element (7) which can be mounted via an adjustment joint (20) on a lateral outer region of the rear doors or behind the rear doors (3), e.g. in the region of a door hinge of the rear doors (3).

12. Rear spoiler device (6) according to one of Claims 1 to 10,
**characterized in that** the air guide element is a roof air guide element (8).

13. Vehicle (1), in particular truck, with a rear spoiler device (6) according to one of the preceding claims,
wherein the rear spoiler device (6) can be adjusted between the base position and the travel position by electric and/or pneumatic control during travel of the vehicle (1).

14. Vehicle (1) according to Claim 13, **characterized in that** in the retracted base position of the rear spoiler device (6), the rear door (3) can be opened and pivoted through almost 270 degrees to rest on a side face (3) of the vehicle (1),
wherein the rear spoiler device (6), when retracted into the base position thereof, is able to be received between the rear door (3) and the side face (6).

## Revendications

1. Dispositif becquet arrière (6) pour un véhicule (1) comportant au moins une porte arrière (3), le dispositif becquet arrière (6) comprenant :
un élément déflecteur d'air (7, 8),
un dispositif de réglage (12) pour le réglage de l'élément déflecteur d'air (7, 8) entre une position de base repliée, qui permet une ouverture de la porte arrière, et une position de circulation déployée pour la prolongation du contour et la déflection d'air aérodynamique,
le dispositif de réglage (12) étant disposé de manière articulée respectivement sur une articulation côté porte (15) et une articulation côté becquet (18), et
comprenant une articulation intermédiaire (17) prévue entre l'articulation côté porte (15) et l'articulation côté becquet (18),
un réglage du dispositif de réglage (12) de la position de base dans la position de circulation conduisant à une modification d'un angle d'articulation intermédiaire (α) formé sur l'articulation intermédiaire (17), **caractérisé en ce que** le dispositif de réglage (12) est configuré lors du réglage de la position de base dans la position de circulation pour
- un premier trajet de réglage avec pliage dans l'articulation intermédiaire (17) et agrandissement d'un bras de levier effectif (a) par rapport à une articulation de réglage (20) de l'élément déflecteur d'air (7) jusqu'à un appui sur l'élément déflecteur d'air (7), et un deuxième trajet de réglage avec appui sur l'élément déflecteur d'air (7) avec réglage de l'élément déflecteur d'air (7).

2. Dispositif becquet arrière (6) selon la revendication 1, **caractérisé en ce que** l'angle d'articulation intermédiaire (α) est formé sous la forme d'un angle entre une ligne de liaison depuis l'articulation intermédiaire (17) jusqu'à l'articulation côté porte (15) et une ligne de liaison depuis l'articulation intermédiaire (17) jusqu'à l'articulation côté becquet (18).

3. Dispositif becquet arrière (6) selon la revendication 1 ou 2, **caractérisé en ce que**, dans la position de base, l'articulation intermédiaire (17) est située en dehors d'une ligne de liaison entre l'articulation côté porte (15) et l'articulation côté becquet (18) et/ou l'angle d'articulation intermédiaire (α0) formé sur l'articulation intermédiaire (17) est différent de 180°.

4. Dispositif becquet arrière (6) selon l'une quelconque des revendications 1 à 3, **caractérisé en ce que** le dispositif de réglage (12) comprend un dispositif d'ajustement de longueur (14, 16) pour l'ajustement d'un écart entre d'un côté l'articulation intermédiaire (17) et d'un autre côté soit l'articulation côté porte (15), soit l'articulation côté becquet (18).

5. Dispositif becquet arrière (6) selon la revendication 4, **caractérisé en ce que** le dispositif d'ajustement de longueur (14, 16) est actionné par une force auxiliaire, de préférence sous la forme d'un réglage pneumatique avec un cylindre pneumatique (14) et une tige de piston déployable (16) ou sous la forme d'un réglage de longueur électrique.

6. Dispositif becquet arrière (6) selon la revendication 4 ou 5, **caractérisé en ce que** le dispositif d'ajustement de longueur (14, 16) est prévu entre l'articulation intermédiaire (16) et l'articulation côté porte (15) pour l'ajustement d'un écart entre l'articulation de porte côté porte (15) et l'articulation intermédiaire (17), et un élément intermédiaire rigide (19) est prévu entre l'articulation intermédiaire (17) et l'articulation côté becquet (18).

7. Dispositif becquet arrière (6) selon l'une quelconque des revendications 4 à 6, **caractérisé en ce que** le réglage entre la position de base et la position de circulation peut à chaque fois être réalisé en un mouvement de réglage continu par déploiement et rétraction du dispositif d'ajustement de longueur (14, 16) .

8. Dispositif becquet arrière (6) selon l'une quelconque des revendications précédentes, **caractérisé en ce que**
dans la position de base, un écart entre l'articulation côté porte (15) et l'articulation côté becquet (18) est minimal et l'angle d'articulation intermédiaire (α) présente une valeur maximale (α0), et
dans la position de circulation, l'écart entre l'articulation côté porte (15) et l'articulation côté becquet (18) est maximal et l'angle d'articulation intermédiaire (α) présente une valeur minimale.

9. Dispositif becquet arrière (6) selon l'une quelconque des revendications précédentes, **caractérisé en ce que** l'articulation côté porte (15) peut être disposée de manière espacée de la porte arrière (3) par l'intermédiaire d'un espaceur, p. ex. d'un palier (15a) .

10. Dispositif becquet arrière (6) selon l'une quelconque des revendications précédentes, **caractérisé en ce que** l'articulation côté becquet (18) est prévue sur le côté intérieur (7a) de l'élément déflecteur d'air (7), de préférence à une distance par rapport au côté intérieur.

11. Dispositif becquet arrière (6) selon l'une quelconque des revendications précédentes, **caractérisé en ce que** l'élément déflecteur d'air est un élément déflecteur d'air latéral (7), qui peut être disposé avec une articulation de réglage (20) sur une zone extérieure latérale de la porte arrière ou derrière la porte arrière (3), p. ex. dans la zone d'une charnière de porte dans la porte arrière (3).

12. Dispositif becquet arrière (6) selon l'une quelconque des revendications 1 à 10, **caractérisé en ce que** l'élément déflecteur d'air est un élément déflecteur d'air de toit (8).

13. Véhicule (1), notamment poids-lourd, muni d'un dispositif becquet arrière (6) selon l'une quelconque des revendications précédentes, dans lequel le dispositif becquet arrière (6) peut être réglé pendant la circulation du véhicule (1) entre la position de base et la position de circulation, par une commande électrique et/ou pneumatique.

14. Véhicule (1) selon la revendication 13, **caractérisé en ce que**, dans la position de base rétractée du dispositif becquet arrière (6), la porte arrière (3) peut être ouverte et peut être pivotée sur presque 270 degrés, pour l'appui sur une surface latérale (3) du véhicule (1),
le dispositif becquet arrière (6) rétracté dans sa position de base pouvant être reçu entre la porte arrière (3) et la surface latérale (6).
